# EUROPEAN PATENT APPLICATION

(11) **EP 3 208 631 A1**
(43) Date of publication of application: **23.08.2017**
(21) Application number: 15850992.7
(22) Date of filing: 14.10.2015
(51) Int. Cl.: G01S 11/06, G01S 13/74, H04M 1/00, H04W 64/00, H04W 92/18

(54) **USER DEVICE AND DISTANCE ESTIMATION METHOD**

(30) Priority: 17.10.2014 JP 2014213222
(71) Applicant: NTT DOCOMO, INC., Chiyoda-ku Tokyo 100-6150 (JP)
(72) Inventor: YASUKAWA, Shimpei, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2015/079082
(87) International publication number: WO 2016/060177

(57) **Abstract**

A user apparatus is provided. The user apparatus is used in a mobile communication system in which D2D communications are supported. The user apparatus includes an acquisition unit configured to acquire transmission power information for D2D signal transmission at a transmission side user apparatus, and a distance estimation unit configured to measure reception power of a reference signal multiplexed with a D2D signal received from the transmission side user apparatus, and to estimate a distance between the transmission side user apparatus and the user apparatus from the reception power and the transmission power.

## Description

### BACKGROUND OF THE INVENTION

### 1. Field of the Invention

The present invention relates to D2D communications (Device to Device communications), and, in particular, relates to a technique for estimating a distance or a position in the D2D communications.

### 2. Description of the Related Art

In a mobile communication system such as a current Long Term Evolution (LTE) system, in general, communications between user apparatuses UEs are performed by having the user apparatuses UEs communicating with a base station eNB. However, in these days, various techniques related to D2D communications (hereinafter referred to as "D2D") are proposed in which the user apparatuses UEs directly perform communications.

In particular, in LTE D2D, "Communication" and "Discovery" are proposed. In the "Communication", the user apparatuses UE perform data communications such as push communications. In the "Discovery", a transmission side user apparatus UE transmits a discovery signal including an ID of the transmission side user apparatus UE and an application ID, and causes a reception side user apparatus UE to detect the transmission side user apparatus UE (refer to NPL 1).

In D2D defined in LTE, it is proposed that a user apparatus UE uses a part of uplink resources predefined for uplink signal transmission from a user apparatus UE to a base station eNB. Further, regarding allocation of resources used for D2D, it is also proposed that the base station eNB provides assistance. In the following, an overview of resource allocation currently proposed for LTE D2D will be described (refer to NPL 1).

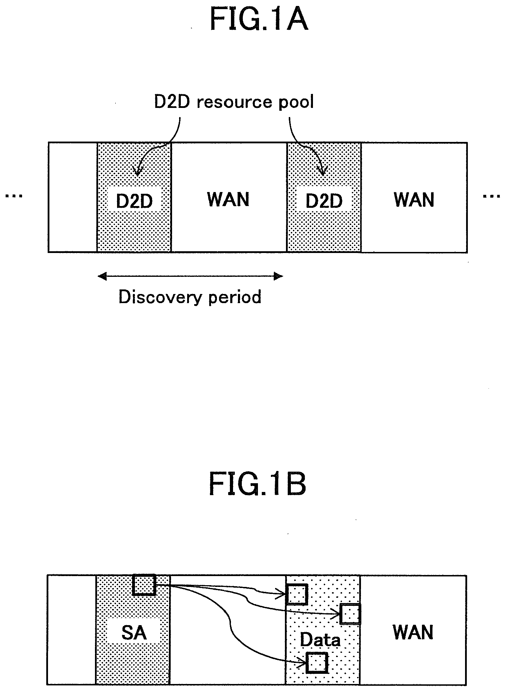

Regarding the "Discovery", as illustrated in Fig. 1A, a resource pool for a discovery signal is reserved in each discovery period, and a user apparatus UE transmits a discovery signal in the resource pool. More specifically, there are Type 1, Type 2a, and Type 2b. In Type 1, the user apparatus UE autonomously selects a transmission resource from the resource pool. In Type 2a, the transmission resource is allocated via (E)PDCCH. In Type 2b, a more semi-static transmission resource is allocated by upper layer signaling (e.g., RRC signal).

Regarding the "Communication", as illustrated in Fig. 1B, it is also assumed that resources for SA/Data transmission are periodically reserved. SA is an acronym of Scheduling Assignment. A transmission side user apparatus UE reports resources for data transmission to a reception side user apparatus UE by using a resource selected from the SA resource pool, and transmits data via the resource for data transmission. A signal for reporting the resource may be referred to as an SA or an SA signal. More specifically, there are Mode 1 and Mode 2 in the "Communication". In Mode 1, resources are allocated more dynamically via (E)PDCCH transmitted from a base station eNB to a user apparatus UE. Further, in the allocation via (E)PDCCH, a semi-static resource allocation (SPS: Semi-persistent scheduling) is also proposed. In Mode 2, a user apparatus UE autonomously selects a transmission resource from the SA resource pool.

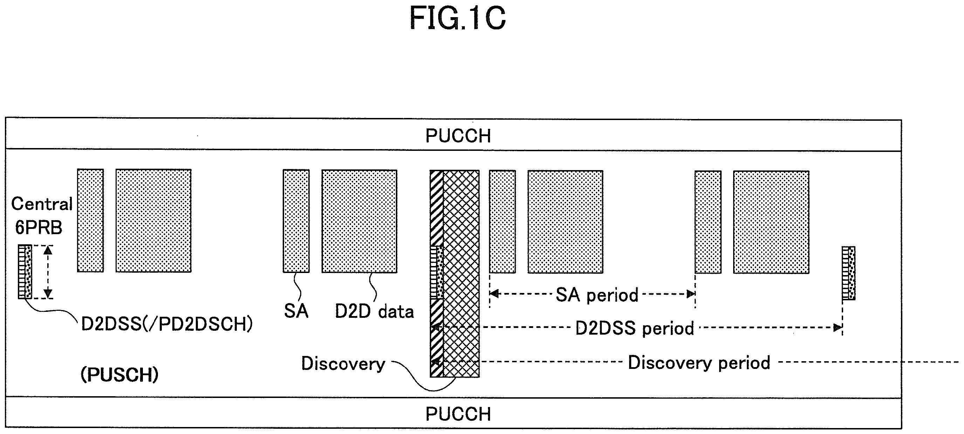

Fig. 1C illustrates more specifically an example in which the D2D resource pool and WAN resources are multiplexed according to FDM/TDM. In Fig. 1C, D2D Synchronization Signal (D2DSS)/Physical D2D Synchronization Channel (PD2DSCH) are also illustrated, which are transmitted periodically.

### [Citation List]

### [Non-Patent Literature]

[NPL 1] 3GPP TR36.843 V12.0.1 (2014-03)

### SUMMARY OF THE INVENTION

### [TECHNICAL PROBLEM]

Various techniques for estimating a position of a user apparatus UE are specified in LTE. There are, for example, an Assisted-Global Navigation Satellite System (A-GNSS) using GPS, a position estimation technique based on received power (reception level) of a signal received from multiple base stations eNBs, a position estimation technique according to an Observed Time Difference Of Arrival (OTDOA) of a signal received from multiple base stations, and a position estimation technique according to an Uplink Time Difference Of Arrival (UTDOA) of a UL signal received at multiple base stations.

On the other hand, a technique is under study also in D2D in which a reception side UE estimates a distance between the reception side UE and a transmission side UE that has transmitted a discovery message. In D2D, similar to the above-described position estimation techniques, received power and a received timing can be considered as a measurement metric used for distance estimation between UEs. It should be noted that, for example, a position of a UE can be calculated if distances are determined between the UE and multiple UEs whose positions are known. Therefore, distance estimation can be applied to position estimation.

When a reception side UE estimates a distance between the reception side UE and a transmission side UE by using received power in D2D, if transmission power of the transmission side UE is constant regardless of the UE, then the distance between the reception side UE and the transmission side UE can be estimated based on the received power strength. However, in general, transmission power is different depending on the UEs due to application differences, etc. Further, transmission power is not constant even in a single UE because a UE performs power control according to a distance between the UE and the base station eNB.

Further, when a reception side UE estimates a distance between the reception side UE and a transmission side UE by using a reception timing in D2D, if a transmission timing of the transmission side UE is constant according to a reception synchronization timing, then the distance between the reception side UE and the transmission side UE can be estimated based on a difference between the reception timing and the transmission timing. However, a transmission timing of a UE is not constant because a UE adjusts the transmission timing according to a distance between the UE and the base station.

Here, in order to measure reception power and, in particular, a reception timing according to a discovery message, it is expected that a Demodulation Reference Signal (DM-RS) will be used which is multiplexed with the discovery message and whose transmission resource (frequency-time position) is known.

However, the DM-RS sequence, etc., are not specific to a UE or a cell. Therefore, in the case where a UE receives DM-RSs in the same resource from multiple UEs, a DM-RS transmitted from a specific UE cannot be identified, and thus, it is difficult to estimate a distance between the UE and the specific UE.

The present invention has been made in view of the above. It is an object of the present invention to provide a technique which enables estimating a distance between user apparatuses or a position of a user apparatus appropriately.

### [SOLUTION TO PROBLEM]

According to an embodiment of the present invention, a user apparatus is provided. The user apparatus is used in a mobile communication system in which D2D communications are supported. The user apparatus includes an acquisition unit configured to acquire information of transmission power for transmitting a D2D signal at a transmission side user apparatus; and a distance estimation unit configured to measure reception power of a reference signal multiplexed with the D2D signal received from the transmission side user apparatus, and to estimate a distance between the transmission side user apparatus and the user apparatus from the reception power and the transmission power.

Further, according to an embodiment, a user apparatus is provided. The user apparatus is used as a first user apparatus in a mobile communication system in which D2D communications between the first user apparatus and a second user apparatus are performed. The user apparatus includes a transmission unit configured to transmit a first D2D signal for requesting transmission of a second D2D signal; a reception unit configured to receive the second D2D signal including a reception timing of the second user apparatus from the second user apparatus that has received the first D2D signal; and a distance estimation unit configured to estimate a distance between the user apparatus and the second user apparatus by using the reception timing included in the second D2D signal.

Further, according to an embodiment of the present invention, a distance estimation method is provided. The distance estimation method is performed by a user apparatus used in a mobile communication system that supports D2D communications. The distance estimation method includes acquiring information of transmission power for transmitting a D2D signal at a transmission side user apparatus; and measuring reception power of a reference signal multiplexed with the D2D signal received from the transmission side user apparatus, and estimating a distance between the transmission side user apparatus and the user apparatus from the reception power and the transmission power.

Further, according to an embodiment, a distance estimation method is provided. The distance estimation method is performed by a user apparatus used as a first user apparatus in a mobile communication system in which D2D communications between the first user apparatus and a second user apparatus are performed. The distance estimation method includes transmitting a first D2D signal for requesting transmission of a second D2D signal; receiving the second D2D signal including reception timing information of the second user apparatus from the second user apparatus that has received the first D2D signal; and estimating a distance between the user apparatus and the second user apparatus by using the reception timing information included in the second D2D signal.

### [ADVANTAGEOUS EFFECTS OF INVENTION]

According to an embodiment, a technique is provided which enables estimating a distance between user apparatuses or a position of a user apparatus appropriately.

### BRIEF DESCRIPTION OF THE DRAWINGS

Fig. 1A is a drawing illustrating D2D communications.
Fig. 1B is a drawing illustrating D2D communications.
Fig. 1C is a drawing illustrating D2D communications.
Fig. 2 is a configuration diagram of a system according to an embodiment of the present invention.
Fig. 3 is a drawing illustrating basic processing according to an embodiment.
Fig. 4 is a drawing illustrating an correction method example 1 of a transmission power difference according to a first embodiment.
Fig. 5 is a drawing illustrating an correction method example 2 of a transmission power difference according to the first embodiment.
Fig. 6 is a drawing illustrating terminal identification according to a DM-RS.
Fig. 7A is a drawing illustrating high precision measurement according to a DM-RS.
Fig. 7B is a drawing illustrating high precision measurement according to a DM-RS.
FIG. 8 is a configuration diagram of a user apparatus according to the first embodiment.
FIG. 9 is a drawing illustrating an operation example according to a second embodiment.
Fig. 10A is a drawing illustrating distance estimation based on a timing.
Fig. 10B is a drawing illustrating distance estimation based on a timing.
Fig. 11A is a drawing illustrating a limiting method example of a transmission resource.
Fig. 11B is a drawing illustrating a limiting method example of a transmission resource.
FIG. 12 is a configuration diagram of a user apparatus according to the second embodiment.
FIG. 13 is a drawing illustrating an operation example according to a third embodiment.
FIG. 14 is a configuration diagram of a position management apparatus 300 according to the third embodiment.
Fig. 15 is a drawing illustrating a structure example of a table stored in a position related information storage unit 302.
FIG. 16 is a configuration diagram of a user apparatus according to the third embodiment.
FIG. 17 is a drawing illustrating an operation example according to a fourth embodiment.
FIG. 18 is a configuration diagram of a position management apparatus 500 according to the fourth embodiment.
FIG. 19 is a configuration diagram of a user apparatus according to the fourth embodiment.

### DETAILED DESCRIPTION OF THE PREFERRED EMBODIMENTS

In the following, referring to the drawings, embodiments of the present invention will be described. The embodiments described below are merely examples and embodiments to which the present invention is applied are not limited to the following embodiments. For example, it is assumed that a mobile communication system according to an embodiment complies with LTE standards. However, the present invention can be applied to, not limited to LTE scheme, but also applied to other schemes. Further, in the following, an example is described in which a distance, etc., are estimated by using mainly a discovery message. However, a method described in the following can be applied to, not limited to the discovery message, but to D2D signals in general such as an SA. It should be noted that, in the application specification and claims, the term "LTE" may be used, not only for meaning a communication method corresponding to 3GPP release 8 or 9, but also for including a communication method corresponding to 3GPP release 10, 11, 12, 13, or later.

### (System configuration)

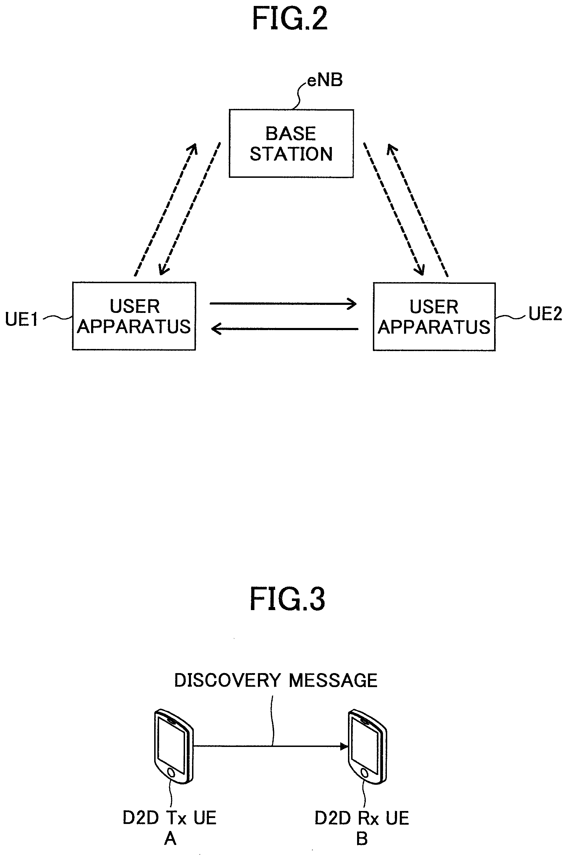

Fig. 2 is a drawing illustrating a configuration example of a communication system according to an embodiment of the present invention (common to embodiments). As illustrated in Fig. 2, the communication system is a cellular communication system in which user apparatuses UE1 and UE2 exist under control of a base station eNB. Each of the user apparatuses UE1 and UE2 has a D2D communication function, and D2D communications can be performed between the user apparatuses UE1 and UE2. Further, it is possible for each of the user apparatuses UE1 and UE2 to perform normal cellular communications with a base station eNB, and to receive resource allocation for D2D communications from the base station eNB.

It is illustrated in Fig. 2 that the user apparatuses UE1 and UE2 are within a coverage of the base station eNB, which is just an example. The present invention can be also applied to a case in which a user apparatus UE is out of the coverage of the base station eNB. In the following, the user apparatuses UE1 and UE2 are collectively referred to as the user apparatus UE. Further, in the following, the user apparatus UE may be referred to as "UE".

As illustrated in Fig. 3, it is a basic process according to an embodiment that a reception side UE of a discovery message estimates a distance between the reception side UE and a transmission side UE by having the transmission side UE (UE-A) transmit a discovery message.

In the following, first to fourth embodiments will be described. It is possible for any or all of the first embodiment to the fourth embodiment to be combined.

### (First embodiment)

### <Transmission power acquisition>

According to a first embodiment, as illustrated in Fig. 3, a distance between a reception side UE and a transmission side UE is estimated by having a discovery message transmitted from a transmission side UE (UE-A), and by having reception power measured by the reception side UE. More specifically, the reception side UE estimates the distance by measuring information of reception power of a DM-RS multiplexed with a discovery message, by obtaining information of transmission power of the transmission side UE, and by using the above-described information items. Further, reception power of a PUSCH based discovery message may be used, or other reference signals may be used. A technique for calculating a distance from reception power and transmission power is generally known. It should be noted that the acquired "transmission power" may be a specific value, or a transmission power range indicating a range of transmission power.

As an example of a method for acquiring, by the reception side UE, transmission power information of the transmission side UE, there is a method in which the transmission side UE, which transmits a discovery message as a reception power measurement target measured by the reception side UE, transmits the transmission power information. The transmission power information may be transmitted by including it in the discovery message, or may be transmitted via another channel (e.g., control channel such as PD2DSCH).

Here, in D2D, by causing a predetermined UE (anchor UE) to transmit a synchronization signal (P2DSS, etc.,) to UEs around the predetermined UE, it is possible for the UEs to form a synchronization group. Among the UEs in the synchronization group, it is possible to transmit and receive a D2D signal at a synchronized timing. As described above, by causing a predetermined UE to transmit a synchronization signal, it is possible to perform D2D communications even when UEs are out of coverage.

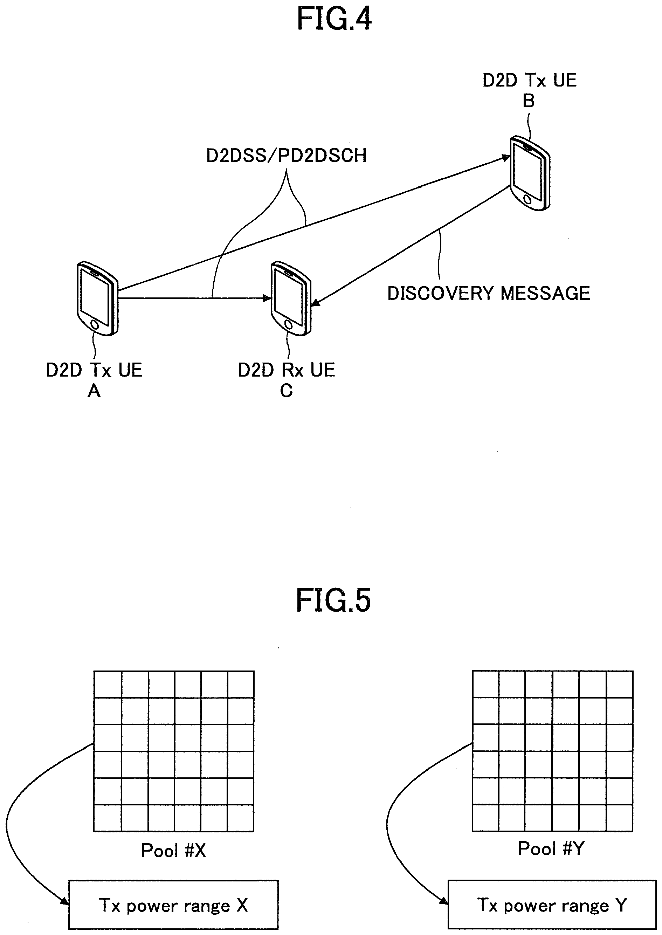

As another example of a method for acquiring, by the reception side UE, transmission power information of the transmission side UE, there is a method in which, by using the above described synchronization group technique, a predetermined UE in the synchronization group (UE-A in Fig. 4) may report the transmission power information to each of the UEs in the synchronization group by using a control channel such as a PD2DSCH as illustrated in Fig. 4. In this case, each UE in the synchronization group transmits a discovery message by using the transmission power reported by the UE-A. With the above arrangement, as illustrated in Fig. 4, a UE-C, which has received a discovery message from a UE-B, estimates (calculates) a distance between the UE-C and the UE-B by using reception power measured from a DM-RS of the discovery message and the transmission power reported by the UE-A.

Further, different from the method of explicitly reporting the transmission power as described above, the transmission power may be reported implicitly.

For example, as illustrated in Fig. 5, in the case where a discovery message is transmitted by using a resource in a resource pool X defined as resources in a certain time-frequency range, the discovery message is supposed to be transmitted by using transmission power associated with the resource pool X (or transmission power in a transmission power range), and in the case where a discovery message is transmitted by using a resource in a resource pool Y defined as resources in another time-frequency range, the discovery message is supposed to be transmitted by using transmission power associated with the resource pool Y (or transmission power in a transmission power range). Information including (indexes of) the resource pools and corresponding transmission power is stored in the reception side UE. Assuming that (DM-RS of) the discovery message has been transmitted with the transmission power corresponding to the resource pool to which the resource of the received discovery message belongs, the reception side UE estimates a distance between the reception side UE and the transmission side UE by using the transmission power and the reception power of the DM-RS.

It should be noted that the information including the resource pools and the corresponding transmission power (transmission power range) may be preset in UEs, or, in the case where UEs are in coverage, the base station eNB may transmit the information to UEs by using RRC signaling, broadcast (notification) information, etc.

Further, in the case where the reception side UE is unable to acquire transmission power of the discovery message of the transmission side UE, the reception side UE may estimate a distance by using its own transmission power by assuming that its own transmission power is the transmission power of the transmission side UE.

### <UE identification based on DM-RS>

As described above, conventionally, there is a problem in that, in the case where the reception side UE receives DM-RSs from multiple UEs via the same resource, the reception side UE cannot determine which UE has transmitted the DM-RS. In order to solve the problem, according to an embodiment, a DM-RS base sequence, cyclic shift, OCC, etc., (hereinafter collectively referred to as DM-RS information) are linked to an identifier of the transmission side UE, and the linked information is used. Further, the DM-RS information may be linked to a random value defined for each UE, and the linked information may be used.

In other words, when a discovery message is received, the reception side UE that has received a DM-RS identifies which UE has transmitted the DM-RS. When identifying a UE that has transmitted the DM-RS, it is not necessary for the reception side UE to include UEs that do not perform D2D communications with the reception side UE. It is sufficient for the reception side UE to identify a UE that has transmitted the DM-RS from UEs that perform D2D communications with the reception side UE. Therefore, it is possible to perform UE identification by using DM-RS information whose information amount is limited.

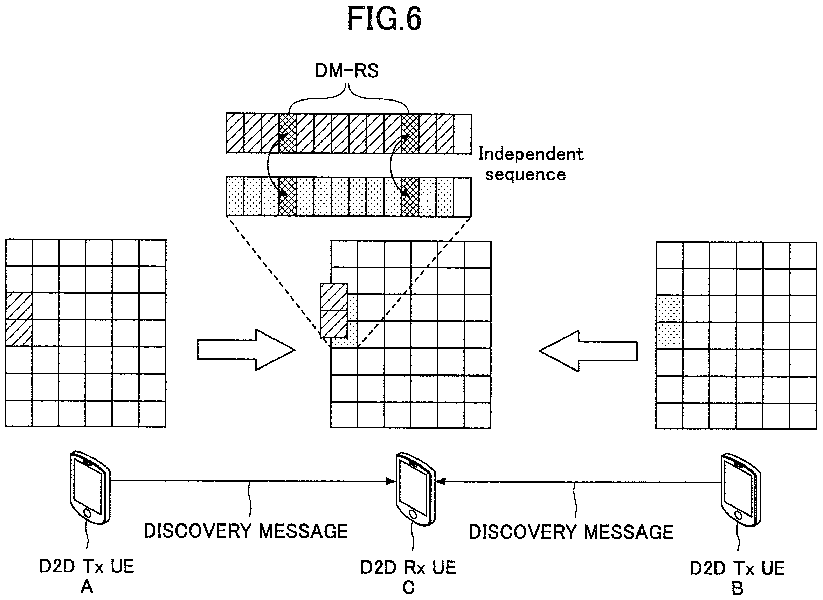

An example of UE identification based on DM-RS is illustrated in Fig. 6. In the example of Fig. 6, each of the transmission sides UE-A and UE-B, transmits a discovery message to the reception side UE-C. At this time, the UE-A and the UE-B transmit DM-RSs via the same resource, and the UE-C receives a signal in which the DM-RS transmitted from the UE-A and the DM-RS transmitted from the UE-B are overlapped.

It is assumed that DM-RS information (the above-described base sequence, etc.,) of the UE-A and DM-RS information of the UE-B are stored in the reception side UE-C. It is possible for the UE-C to separate the DM-RS from the UE-A and the DM-RS from the UE-B by using the DM-RS information.

It should be noted that, as a method of acquiring, by the reception side UE, DM-RS information of the transmission side UE, for example, when a discovery message has been received in advance, the reception side UE may acquire DM-RS information, associate an identifier (included in the discovery message) of the transmission source of the discovery message with the DM-RS information, and store the associated result. Alternatively, information including the identifier of the transmission source and the corresponding DM-RS information may be reported from the base station eNB to the reception UE.

It should be noted that the UE identification is performed at the time of reception power measurement in the above example. However, the UE identification of the DM-RS can be performed also at the time of reception timing measurement. The reception power measurement is listed as an example also in the following high precision measurement based on DM-RS. However, similar high precision measurement may be also applied to the reception timing measurement.

### <High precision measurement based on DM-RS>

When performing measurement of reception power of DM-RS, the more the amount of received resources, the more precisely the measurement can be performed. Therefore, density of DM-RS mapping resources, which resources are multiplexed with a discovery message, may be increased. As an example, mapping density of DM-RS may be changed for each resource pool, or, the same discovery message may be transmitted multiple times. With the above arrangement, it is possible to increase DM-RS resource amount, and it is possible to improve DM-RS-used reception power measurement (and timing estimation precision).

Further, the reception side UE may perform accumulation of measurement results of DM-RSs received with multiple discovery messages, and averaging may be performed by an upper layer by using forgetting coefficients. It should be noted that there is a half duplex limitation in D2D communications in which transmission and reception cannot be performed at the same time. Therefore, subframes that are not received due to the half duplex limitation may be excluded from the averaging target.

Here, "accumulation" according to an embodiment may either refer to acquiring a measurement result (reception power, reception timing) each time when a DM-RS is received, and accumulating (adding) the measurement results, or refer to accumulating (adding) DM-RS signals (including information from which reception power and reception timing can be acquired) and acquiring a measurement result from the accumulated DM-RS signals. In the following descriptions, the former case is assumed.

As described above, there are Type 1, Type 2a, and Type 2b in the discovery resource selection. In Type 1, the user apparatus UE autonomously selects a transmission resource randomly from a resource pool. In the following, a more specific method example of DM-RS accumulation will be described by taking a case of Type 1 as an example.

It is assumed that the transmission side UE, which has transmitted a discovery message by selecting a certain resource in a resource pool, performs retransmission of the discovery message in the resource pool. A resource used for the retransmission is determined based on the initial transmission resource according to a predetermined rule. This type of retransmission method can be referred to as a deterministic hopping-pattern retransmission.

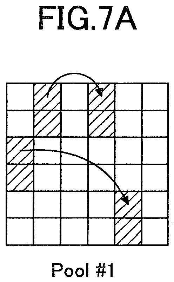

In other words, it is possible for the reception side to determine which resource will be used for retransmission of the discovery message if only the initial reception resource is acquired. Fig. 7A illustrates an example of retransmission in a resource pool.

In addition to reception power measurement based on a DM-RS at the initial transmission, the reception power measurement is performed based on a DM-RS of retransmitted discovery messages. A measurement result with precision higher than that of a single reception can be acquired by accumulating and averaging the above measurement results.

According to an embodiment, the above-described accumulation method is further enhanced, and, in Type 1 resource allocation, deterministic hopping-pattern retransmission is also performed between resource pools.

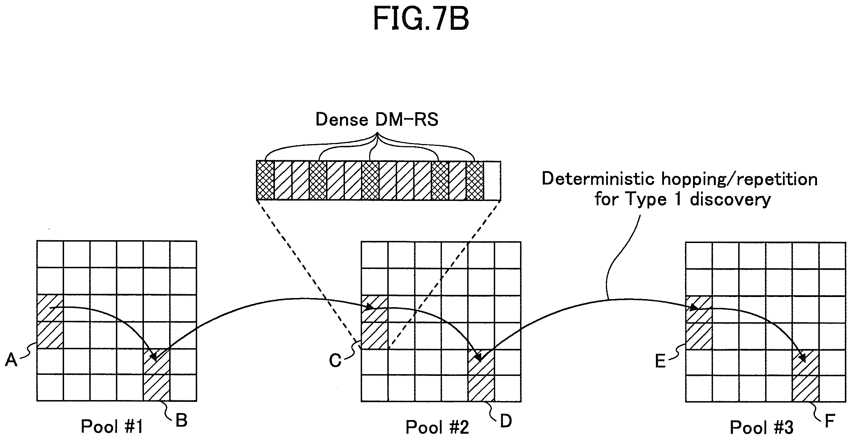

Fig. 7B illustrates an example of retransmission according to hopping between resource pools. It is illustrated in Fig. 7B that a resource pool 1, a resource pool 2, and a resource pool 3 arrive according to the elapse of time.

In an example of Fig. 7B, after a discovery message indicated by "A" is transmitted, intra-resource-pool retransmission B is performed, and further, inter-resource-pool retransmission C is performed in the next resource pool 2, and then, intra-resource-pool retransmission D is performed. Similarly, retransmission E and retransmission F are performed.

Further, in Fig. 7B, an example is illustrated in which DM-RSs are mapped to a discovery message with high density. According to an embodiment, the reception side UE measures reception power by using DM-RSs of each of the transmitted/retransmitted discovery messages as illustrated in Fig. 7B, performs, for example, accumulation and averaging of measurement results, and uses the average value as reception power for distance estimation.

As a hopping pattern for the above-described inter-resource-pool retransmission, there is a method, for example, in which a time position and a frequency position of the second transmission resource (e.g., C in Fig. 7B) are calculated based on a time position and a frequency position of the first transmission resource (e.g., A in Fig. 7B). In the case where a time position and a frequency position of the first transmission resource are t1 and f1, respectively, and a time position and a frequency position of the second transmission resource are t2 and f2, respectively, assuming that A and B are predetermined functions, t2 and f2 can be represented by t2=A(t1, f1), f2=B(t1, f1). In the case where retransmission is performed multiple times, resources can be also determined in the similar manner.

Further, as a retransmission pattern, a pattern specified in Type 2B discovery may be used. Alternatively, a pattern specified in Type 1 PUSCH hopping or Type 2 PUSCH hopping in cellular may be used.

It should be noted that there may be a case where collisions may occur continuously by retransmission when multiple UEs select the same discovery transmission resource. In order to avoid the above-described case, a hopping continuation window may be specified based on a time index (D2D frame number, resource pool index, etc.). That is, it is assumed that a UE continues retransmission during the time of a hopping continuation window defined based on a time index at the time of first discovery message transmission, and, when the window is exceeded, selects a new resource randomly and performs discovery message transmission.

Regarding the above-described inter-resource-pool hopping pattern and regarding whether or not the inter-resource-pool hopping pattern is performed, the base station eNB may report to UEs via a predetermined signaling (e.g., SIB, MAC signal).

As described above, estimation precision of reception power/reception timing based on DM-RS is improved by introducing not only intra-resource-pool retransmission but also inter-resource-pool retransmission, and by causing the reception side UE to accumulate measurement results of retransmitted DM-RSs and to use the accumulated result. Further, because deterministic hopping patterns are used, wasteful reception (monitoring) of retransmission signals is not performed, and thus, a buffer amount can be reduced.

### <Configuration example of user apparatus UE>

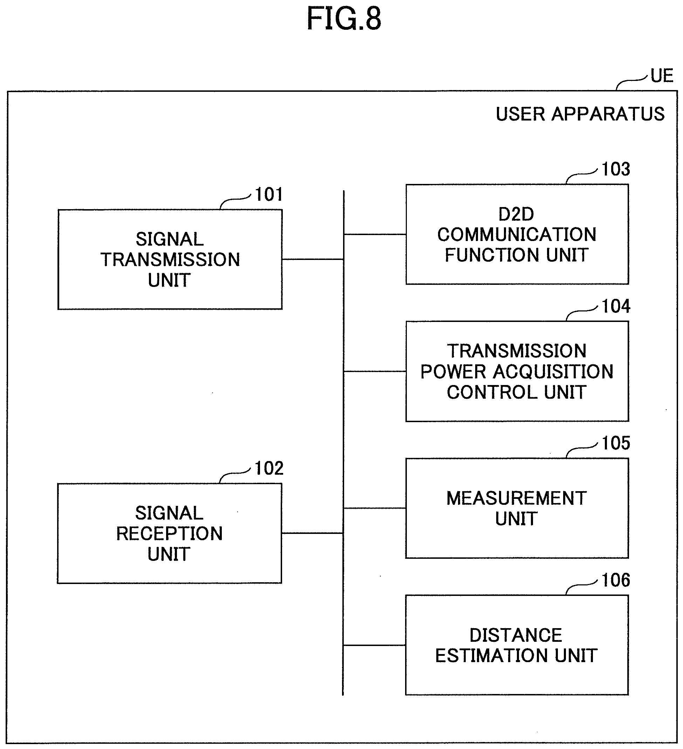

FIG. 8 illustrates a functional structure diagram of the user apparatus UE according to an embodiment. It is assumed that the user apparatus UE has functions of a transmission side UE and a reception side UE according to an embodiment as described above. The user apparatus UE may have only a function of the transmission side UE or only a function of the reception side UE.

As illustrated in Fig. 8, the user apparatus UE includes a signal transmission unit 101, a signal reception unit 102, a D2D communication function unit 103, a transmission power acquisition control unit 104, a measurement unit 105, and a distance estimation unit 106. It should be noted that Fig. 8 illustrates functional units of the user apparatus UE especially related to an embodiment only, and thus, the user apparatus UE further includes at least functions for performing operations according to LTE (not shown in the figure). Further, a functional structure illustrated in Fig. 8 is merely an example. Functional classification and names of functional units may be anything as long as operations related to an embodiment can be performed.

The signal transmission unit 101 includes a function for wirelessly transmitting various kinds of physical layer signals generated from an upper layer signal which should be transmitted from the user apparatus UE. Further, the signal transmission unit 101 has a transmission function of D2D communications and a transmission function of cellular communications.

The signal reception unit 102 includes a function for wirelessly receiving various kinds of signals from another user apparatus UE or the base station eNB, and obtaining upper layer signals from the received physical layer signals. The signal reception unit 102 has a reception function of D2D communications and a reception function of cellular communications.

The D2D communication function unit 103 has functions of D2D applications, and performs resource allocation and transmission-reception control of a discovery signal, and resource allocation and transmission-reception control of SA/Data.

The transmission power acquisition control unit 104 includes a function for acquiring UE transmission power by using a method described while making reference to Fig. 4 and Fig. 5. Further, the transmission power acquisition control unit 104 may include a function for reporting the transmission power to other UEs. The measurement unit 105 includes a function for measuring reception power (or, reception timing) of a reference signal such as a DM-RS received from other UEs. The measurement unit 105 may include a terminal identification function described while making reference to Fig. 6, and a function of the high precision measurement described while making reference to Fig. 7A and Fig. 7B. The distance estimation unit 106 includes a function for estimating a distance from the reception power, transmission power, etc. Further, the signal transmission 101 in the user apparatus UE may include a function of DM-RS transmission as described while making reference to Fig. 6, Fig. 7A, and Fig. 7B.

As described above, according to an embodiment, a user apparatus is provided. The user apparatus is used in a mobile communication system that supports D2D communications. The user apparatus includes an acquisition unit configured to acquire transmission power information for D2D signal transmission at a transmission side user apparatus, and a distance estimation unit configured to measure reception power of a reference signal multiplexed with a D2D signal received from the transmission side user apparatus, and to estimate a distance between the transmission side user apparatus and the user apparatus from the reception power and the transmission power. With the above arrangement, it is possible to appropriately estimate a distance between user apparatuses or a position of a user apparatus.

The transmission power information is, for example, transmitted from a predetermined user apparatus by using a predetermined channel, or, implicitly reported as information associated with a resource pool to which transmission resource of a D2D signal received from the transmission side user apparatus belongs. It is possible for the reception side user apparatus to explicitly determine the transmission power information by acquiring information transmitted from a predetermined user apparatus by using a predetermined channel as the transmission power information. Further, it is possible to reduce overhead by reporting the transmission power information implicitly as information associated with a resource pool.

The reference signal may include, for example, information associated with the transmission side user apparatus, and the distance estimation unit may identify the reference signal transmitted from the transmission side user apparatus by using the information in the case where multiple reference signals are received via the same resource. With the above arrangement, it is possible for the reception side user apparatus to determine from which transmission source the reference signal has been transmitted even in the case where multiple reference signals have been transmitted in the same resource.

The distance estimation unit may calculate the reception power to be used for the distance estimation by measuring reception power of a D2D signal transmitted from the transmission side user apparatus and reception power of the D2D signal retransmitted one or more times from the transmission side user apparatus. With the above arrangement, the received power can be calculated more precisely.

### (Second embodiment)

Next, a second embodiment will be described. According to the second embodiment, timing information is acquired by using a discovery message, and a distance is estimated by using the timing information.

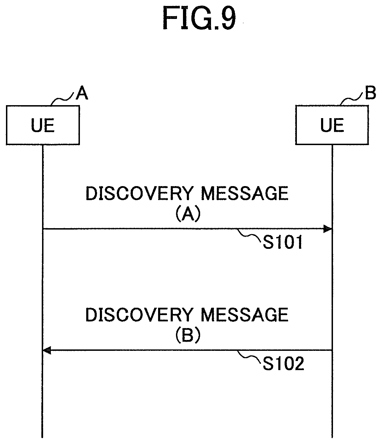

An operation example according to the second embodiment will be described while making reference to a sequence illustrated in Fig. 9. Fig. 9 illustrates a case as an example in which a UE-A acquires timing information (offset value) from a UE-B, and the UE-A estimates a distance between the UE-A and the UE-B.

Further, in the example of Fig. 9, it is assumed that the UE-A and the UE-B are in a coverage of a base station eNB, and that each UE transmits a discovery message according to a DL reception timing (DL synchronization signal reception timing). An embodiment will be described by taking a case as an example in which a D2D signal is transmitted at a downlink signal reception timing.

It should be noted that the transmission timing is controlled by the base station eNB in the above example. However, in D2D, a predetermined UE (e.g., a distance estimation target UE) may transmit a synchronization signal (a D2DSS, a discovery message, etc.,) to other UEs, and may control transmission timings of the other UEs. It is possible to control synchronization timings between UEs by using UE specific signals such as a discovery message.

In step 101 of Fig. 9, the UE-A transmits a discovery message (A), and the discovery message (A) is received by the UE-B. Upon receiving the discovery message (A), the UE-B transmits a timing report discovery message (B) (step 102).

In the discovery message (A), for example, information is included requesting the reception side UE to transmit the timing report discovery message. Further, a DM-RS base sequence (group hopping, sequence hopping, Delta shift, cell ID), cyclic shift, OCC, etc., multiplexed with the discovery message (A) may be used as the information requesting the reception side UE to transmit the timing report discovery message.

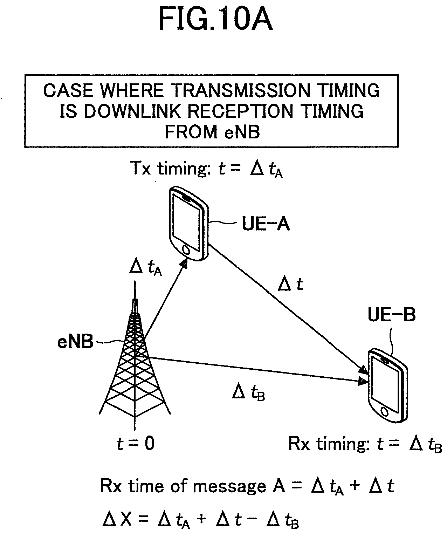

The discovery message (B) transmitted from the UE-B in step 102 includes a gap (offset value ΔX) between a quantized UE-B reception synchronization timing (reception reference timing) and the discovery message (A) reception timing. In other words, the time when the discovery message (A) has been received is reported to the UE-A. Alternatively, an estimation value of a distance between the UEs may be included. As an example, as illustrated in Fig. 10A, in the case where the UE-B receives the message (A) at "Δt_{A} (transmission timing from the UE-A) + At(propagation delay)", the offset value ΔX=Δt_{A}+Δt-Δt_{B}. In other words, in the case where the UE-A uses a base station eNB downlink reception timing as a transmission timing, ΔX is (propagation delay between the UE-A and the UE-B)+(a propagation delay gap between a propagation delay between the base station eNB and the UE-A and a propagation delay between the base station eNB and the UE-B). Therefore, the propagation delay gap and a TA (Timing Advance) value of each UE may be reported as ΔX correction information from the base station to UEs via upper layer signaling. The information transmitted from the UE-B by using the discovery message (B) may be not ΔX but a corrected value to which the correction information has been applied. Further, both ΔX and the corrected value may be transmitted.

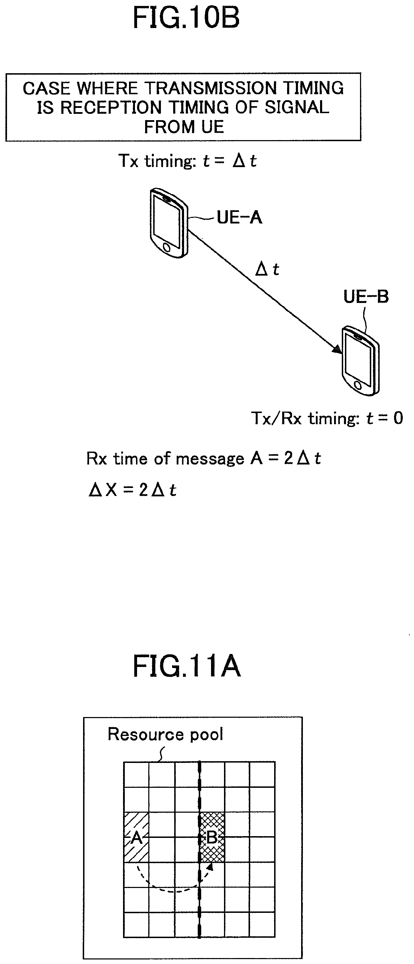

On the other hand, as illustrated in Fig. 10B, in the case where the UE-A uses a reception timing of a signal from the UE-B as a transmission timing, ΔX is two times the propagation delay between the UEs. Therefore, it is possible to estimate a distance by using only ΔX, and thus, it is possible to estimate a distance even when UEs are out of coverage or in an RRC_IDLE state.

Further, the discovery message (B) may include an identifier calculated from contents (information with which the discovery message (A) can be identified by the UE-A) of the discovery message (A), or from a time/frequency index (e.g., initial transmission resource) of the discovery message (A). With the above arrangement, it is possible for the UE-A, which has received the discovery message (B), to determine that the discovery message (B) is a response to the discovery message (A) and includes timing information. The UE-A estimates a distance between the UE-A and the UE-B by using the timing information.

It should be noted that the above example is merely an example, and that a method for calculating a distance by using timings is not limited to the above example.

Further, the transmission resource of the discovery message (B) in step 102 of Fig. 9 may be limited in order to reduce complexity of the reception side. Specifically, for example, as illustrated in Fig. 11A, without performing retransmission within a resource pool, a discovery message (A) may be transmitted in the first half of the resource pool and a discovery message (B) may be transmitted in the second half of the resource pool. In other words, in this case, the UE-B calculates a retransmission resource based on the received resource of the discovery message (A) according to a predetermined hopping rule, and transmits the discovery message (B) via the resource. On the other hand, the UE-A calculates a retransmission resource based on a transmission resource of the discovery message (A) according to the predetermined hopping rule, and receives (monitors) the discovery message (B) via the resource without performing the retransmission.

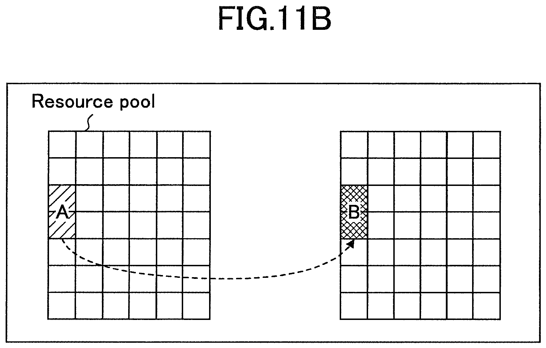

Further, as illustrated in Fig. 11B, the transmission of the discovery message (B) may be limited to a resource in a resource pool subsequent to the resource pool in which the discovery message (A) has been transmitted. Which resource in the subsequent resource pool is used may be determined by using the above-described hopping patterns used for retransmission between resource pools.

It should be noted that, in order to transmit the discovery message (B), a predefined hopping pattern as described above may be used, or, without defining a hopping pattern, for example, the resource may be selected randomly within the resource pool and used for the transmission in order to avoid a collision.

### <Configuration example of user apparatus UE>

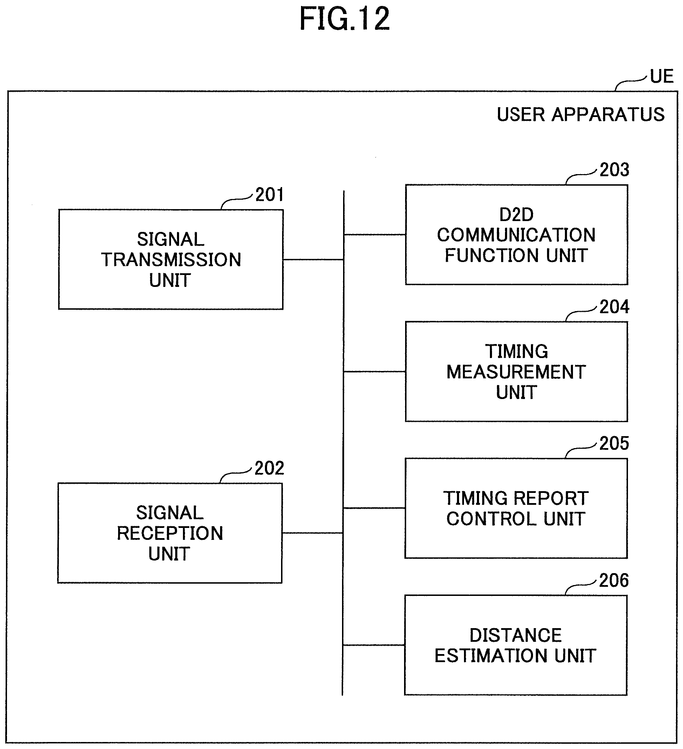

FIG. 12 illustrates a functional structure diagram of the user apparatus UE according to an embodiment. It is assumed that the user apparatus UE has functions of a transmission side UE and a reception side UE according to an embodiment as described above. The user apparatus UE may have only a function of the transmission side UE or only a function of the reception side UE.

As illustrated in Fig. 12, the user apparatus UE includes a signal transmission unit 201, a signal reception unit 202, a D2D communication function unit 203, a timing measurement unit 204, a timing report control unit 205, and a distance estimation unit 206. It should be noted that Fig. 12 illustrates functional units of the user apparatus UE especially related to an embodiment only, and thus, the user apparatus UE further includes at least functions for performing operations according to LTE (not shown in the figure). Further, a functional structure illustrated in Fig. 12 is merely an example. Functional classification and names of functional units may be anything as long as operations related to an embodiment can be performed.

The signal transmission unit 201, the signal reception unit 202, and the D2D communication function unit 203 have similar functions as the signal transmission unit 101, the signal reception unit 102, and the D2D communication function unit 103, respectively, as described while making reference to Fig. 8.

The timing measurement unit 204 includes, for example, a function for measuring a reception timing of a reference signal included in a discovery message or the like (e.g., DM-RS), and a function for acquiring its own timing offset value. The timing report control unit 205 includes, for example, a function for returning a message including the offset value according to reception of a message illustrated in step 101 of Fig. 9, and a function as a transmission side function for transmitting a message of step 101 as a request for transmission of a message of step 102. Further, the timing report control unit 205 also includes a function for limiting a resource as illustrated in Fig. 11A and Fig. 11B. The distance estimation unit 206 includes a function for calculating a distance to a target UE (counterpart UE) based on timing information acquired by the timing measurement unit 204 and the timing report control unit 205.

According to an embodiment, a user apparatus is provided. The user apparatus is used as a first user apparatus in a mobile communication system in which D2D communications are performed between the first user apparatus and a second user apparatus. The user apparatus includes a transmission unit configured to transmit a first D2D signal for requesting transmission of a second D2D signal, a reception unit configured to receive the second D2D signal including reception timing information of the second user apparatus from the second user apparatus that has received the first D2D signal, and a distance estimation unit configured to estimate a distance between the user apparatus and the second user apparatus by using the reception timing information included in the second D2D signal. With the above arrangement, it is possible to appropriately estimate a distance between user apparatuses or a position of a user apparatus.

The transmission unit may report that the first D2D signal is a request requesting transmission of the second D2D signal based on information of a reference signal multiplexed with the first D2D signal. With the above arrangement, it is possible to determine whether the received D2D signal is for requesting transmission of a D2D signal including reception timing information.

In the second D2D signal, identification information corresponding to the first D2D signal is included, and, according to the identification information, the reception unit may determine that the second D2D signal is a response to a request via the first D2D signal. With the above arrangement, it is possible for the user apparatus to distinguish a D2D signal including the reception timing information from received multiple D2D signals.

A resource, which would be used as a retransmission resource of the first D2D signal in the case of retransmitting the first D2D signal, may be used as a transmission resource of the second D2D signal of the second user apparatus. With the above arrangement, it is possible to limit the transmission resource of the second D2D signal, and it is possible to reduce complexity of the reception side.

### (Third embodiment)

Discovery message transmission timings and parameters such as transmission power may be different between cells or carriers. According to a third embodiment, a method that can be applied to this kind of situation will be described. In the third embodiment, a UE estimates a distance to another UE, or estimates a position of another UE by having assistance from a network.

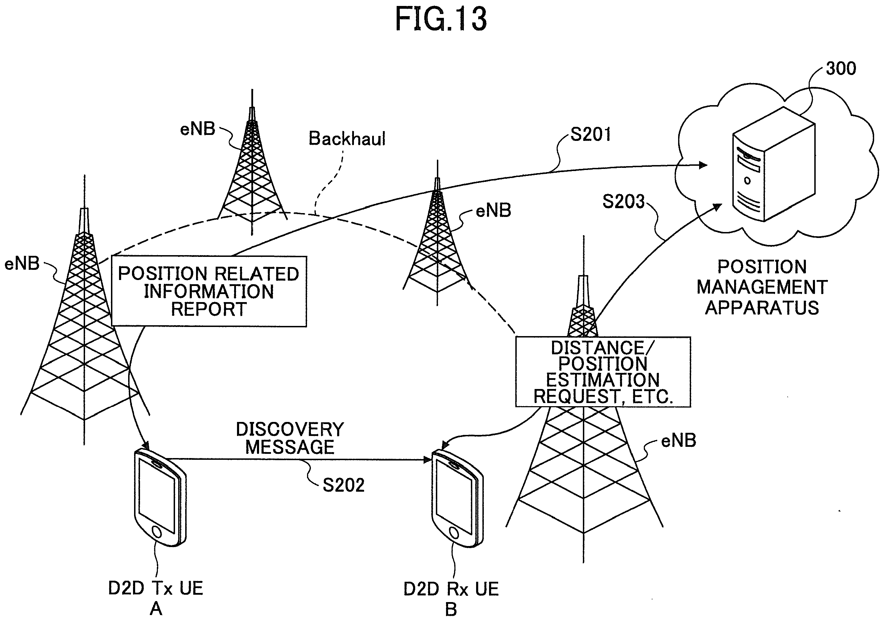

Referring to Fig. 13, an operation example according to the third embodiment will be described. As illustrated in Fig. 13, in an embodiment, a position management apparatus 300 used for managing and providing information related to positions, etc., is included. The position management apparatus 300 may be, for example, connected to the Internet, or, included in a core network in a mobile communication network. Further, a predetermined base station eNB may include functions of the position management apparatus 300. In any cases, it is possible for UEs to communicate with the position management apparatus 300 and to acquire various kinds of information items from the position management apparatus 300.

In step 201 of Fig. 13, a UE-A transmits information related to its position to the position management apparatus 300, and the position management apparatus 300 associates the information related to the position of the UE-A with the UE-A, and stores the associated result. It should be noted that, according to an embodiment, it is assumed that each UE that performs D2D periodically transmits position related information to the position management apparatus 300. Here, as an example, a case is illustrated in which the UE-A transmits the position related information.

The position related information is, for example, transmission power, timings (the above-described offset values), and an own position. The position related information may be one of them, or multiple of them. The "position" information is, for example, position information of the UE acquired according to existing techniques. For example, it may be information represented by longitude and latitude, information represented by an area index, or another form of information.

In the position management apparatus 300, information, used for identifying a UE and stored together with the position related information, may be an identifier of a UE that transmits the identifier included in the discovery message, an index of a resource (time/frequency) used by the UE for the discovery message transmission, or other information.

In step 202 of Fig. 13, the UE-A transmits a discovery message, and the discovery message is received by the UE-B.

In step 203, it is possible for the UE-B to acquire a distance to the UE-A or a position of the UE-A by requesting the position management apparatus 300 to estimate the distance to the UE-A or the position of the UE-A, and by receiving an estimation result from the position management apparatus 300. An identifier of the UE-A included in the discovery message, or an index of a reception resource of the discovery message is included in a request transmitted to the position management apparatus 300 in order to indicate that the request is related to the UE-A.

Further, it may be assumed that, when requesting the distance estimation, reception power, reception timing, etc., measured by using a DM-RS of the discovery message are included in the request and transmitted to the position management apparatus 300. Upon receiving the request, the position management apparatus 300 acquires, from the identifier, index, etc., included in the request, corresponding information (transmission power, transmission timing, etc.), and calculates a distance from information (reception power, reception timing, etc.) included in the request, and returns a calculated distance to the UE-B. Further, in the case where the position management apparatus 300 has already acquired position information from each UE, it is possible for the position management apparatus 300 to return the stored position information in response to the position information request.

Other than the above processing, it may be assumed that, in step 203, the UE-B requests the position management apparatus 300 to return transmission power, transmission timing, etc., of the UE-A to the UE-B, acquires the transmission power, transmission timing, etc., of the UE-A, and estimates a distance from reception power (reception timing) of a DM-RS of the discovery message and the transmission power (transmission timing).

Further, it may be assumed that, the reception side UE-B transmits its own position to the position management apparatus 300 in advance, and that, when the position management apparatus 300 receives a request from the UE-B (the request of step 203 subsequent to step 202 in Fig. 13), the position management apparatus 300 may examine whether the discovery message in step 202 can be detected by the UE-B. The examination may be performed by calculating a distance between the UE-A and the UE-B from a position of the UE-A as a transmission source of the discovery message and a position of the UE-B, and by using the calculated distance. For example, the position management apparatus 300 may determine that the discovery message cannot be detected when the distance is greater than a predetermined value. Further, in the case where the position management apparatus 300 determines that the discovery message cannot be detected (in the case where the UE is out of range), it may be assumed that the position management apparatus 300 does not return position information, etc., in response to the request. With the above arrangement, it is possible to ensure security and reduce false detection.

Further, information related to a transmissionable discovery message may be transmitted from the base station eNB to each UE in such a way that a message space of the transmissionable discovery message is limited to each UE and/or each application. Further, for example, in the case where information corresponding to the request is not stored in the position management apparatus 300 that has received a request in step 203 in Fig. 13, the position management apparatus 300 may transmit a paging signal or the like to the discovery message transmission source UE related to the request and request the information. According to the third embodiment, it is possible to estimate a distance or a position even in the case where cells/carriers/PLMNs are different.

### <Configuration example of position management apparatus 300>

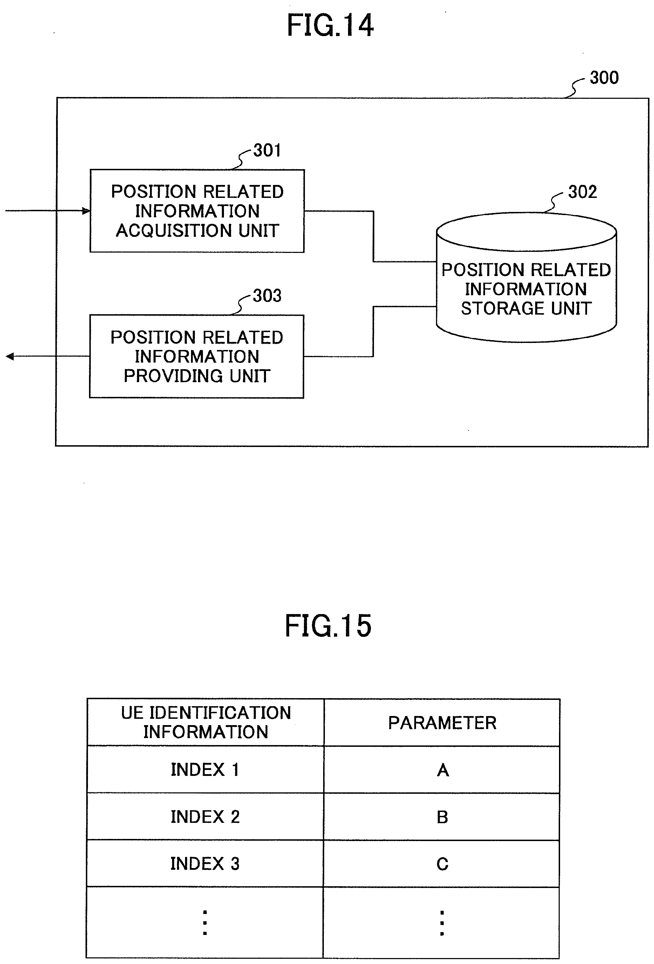

Fig. 14 illustrates a functional structure diagram of a position management apparatus 300 that performs processes according to an embodiment. The position management apparatus 300 may be a server apparatus realized by a computer including a processor such as a CPU, or may be a dedicated apparatus (circuitry, etc.)

As illustrated in Fig. 14, the position management apparatus 300 includes a position related information acquisition unit 301, a position related information storage unit 302, and a position related information providing unit 303. It should be noted that Fig. 14 illustrates only main function units in the position management apparatus 300. The position management apparatus 300 illustrated in Fig. 14 includes at least functions for performing all operations of the position management apparatus 300 described according to an embodiment. Further, a functional structure illustrated in Fig. 14 is merely an example. Functional classification and names of functional units may be anything as long as operations related to an embodiment can be performed.

The position related information acquisition unit 301 acquires position related information as described in, for example, step 201 in Fig. 13, and stores the acquired information in the position related information storage unit 302.

Fig. 15 illustrates an example of the information (table) stored in the position related information storage unit 302. In the example illustrated in Fig. 15, a resource index is stored as UE identification information, and, position information, transmission power, timings, etc., are stored as parameters. The position related information providing unit 303 includes a function for providing the position related information to UEs as described in, for example, step 203 in Fig. 13.

### <Configuration example of user apparatus UE>

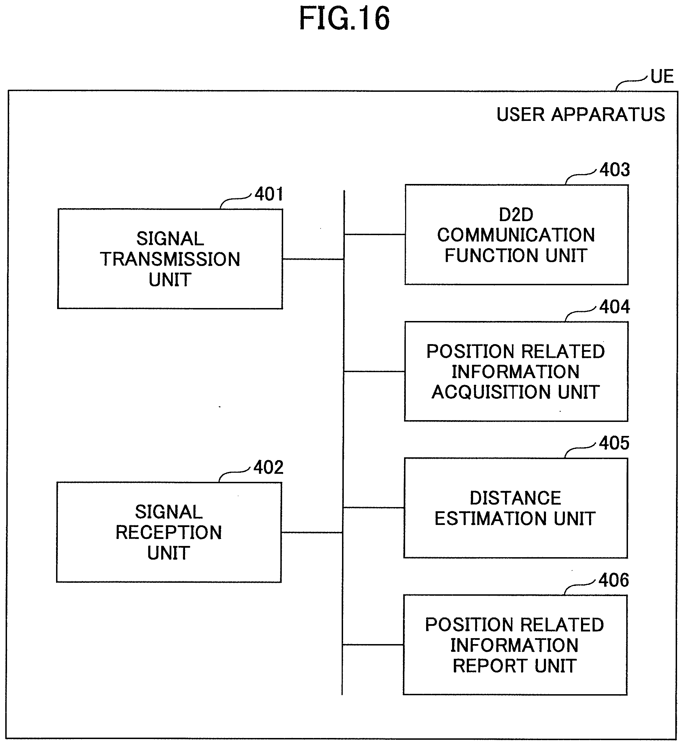

FIG. 16 illustrates a functional structure diagram of the user apparatus UE that performs processing according to an embodiment. It is assumed that the user apparatus UE has functions of a transmission side UE and a reception side UE according to an embodiment. The user apparatus UE may have only a function of the transmission side UE or only a function of the reception side UE.

As illustrated in Fig. 16, the user apparatus UE includes a signal transmission unit 401, a signal reception unit 402, a D2D communication function unit 403, a position related information acquisition unit 404, a distance estimation unit 405, and a position related information report unit 406. It should be noted that Fig. 16 illustrates only main function units in the user apparatus UE. The user apparatus UE illustrated in Fig. 16 includes at least functions for performing all operations of the user apparatus UE described according to an embodiment. Further, the user apparatus UE also includes at least functions (not shown in the figure) for operating according to LTE. Further, a functional structure illustrated in Fig. 16 is merely an example. Functional classification and names of functional units may be anything as long as operations related to an embodiment can be performed.

The signal transmission unit 401, the signal reception unit 402, and the D2D communication function unit 403 have similar functions as the signal transmission unit 101, the signal reception unit 102, and the D2D communication function unit 103, respectively, as described while making reference to Fig. 8.

The position related information acquisition unit 404 includes a function for acquiring the position related information as described in, for example, step 203 in Fig. 13. Further, the position related information report unit 406 includes a function for reporting the position related information as described in, for example, step 201 in Fig. 13. The distance estimation unit 405 includes a function for estimating a distance from transmission power (transmission timing) acquired from the position related information acquisition unit 404 and reception power (reception timing) of a signal received from the transmission side UE.

### (Fourth embodiment)

The number of bits of an existing discovery message is somewhere around 200 bits. Therefore, normally, only limited information can be included in the discovery message itself. According to a fourth embodiment, a technique is provided which enables transmitting position information even if there is this kind of limitation, and a technique is provided which enables transmitting a greater amount of information by using the discovery message. In the following, the fourth embodiment will be described in detail.

According to the fourth embodiment, it is assumed that the transmission side UE includes information indicating its own position in the discovery message and transmits the discovery message.

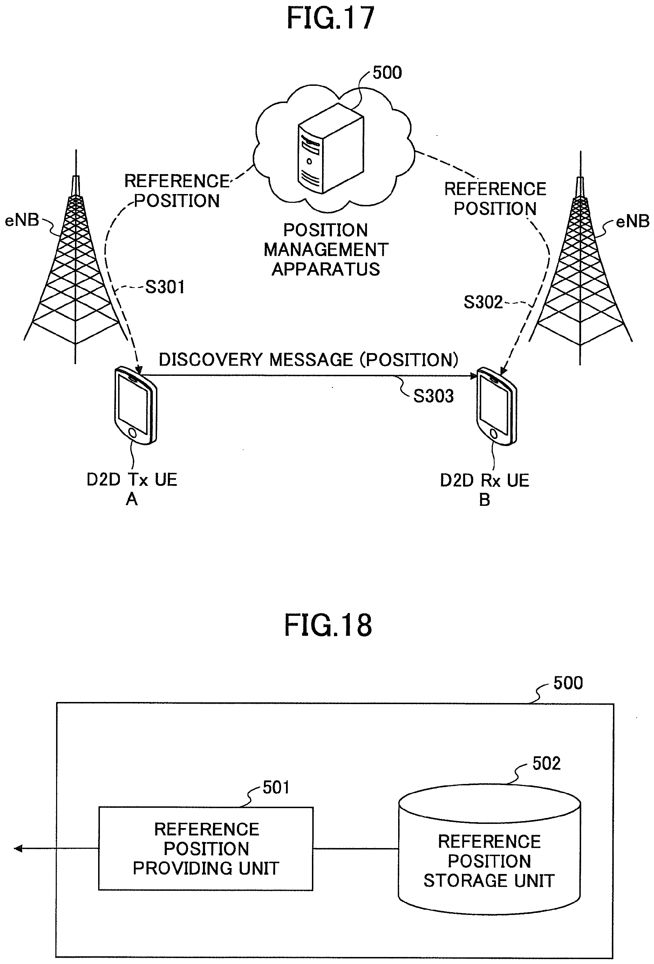

Referring to Fig. 17, an operation example of a system according to the fourth embodiment will be described. As illustrated in Fig. 17, in an embodiment, a position management apparatus 500 is included used for managing and providing reference position information. The position management apparatus 500 may be, for example, connected to the Internet, or, included in a core network in a mobile communication network. Further, the base station eNB may include functions of the position management apparatus 500. In any cases, it is possible for UEs to communicate with the position management apparatus 500 and to acquire the reference position information from the position management apparatus 500.

Further, it is assumed that each UE has already acquired its own position information by using, for example, an existing technique.

In step 301 and 302 in Fig. 17, the UE-A and the UE-B acquire the reference position. It should be noted that the using the reference position is not required, but, according to an embodiment, as an example, the reference position can be used.

In step 303, the UE-A transmits a discovery message including its own position, and the discovery message is received by the UE-B. It is possible for the UE-B to acquire the UE-A position by extracting information indicating the UE-A position from the received discovery message.

It may be assumed that, in the discovery message transmitted by the UE-A, in addition to a terminal identifier, for example, position information (e.g., longitude, latitude) is included. However, the position information may increase an information amount (the number of bits), and there is a possibility that all of the position information may not be included in the discovery message. Therefore, the information amount may be reduced as described below.

For example, the UE-A includes a difference between the reference position received from the position management apparatus 500 and the position of the UE-A in the discovery message and transmits the included result. The reference position is, for example, a position according to a country unit, a position according to an area unit, a position according to a predetermined area unit, or another position. As a result of using the reference position, it is only necessary to transmit a difference, and thus, it is possible to reduce information to be transmitted. It is possible for the reception side UE-B to acquire (estimate) information of a position of the UE-A from the difference information included in the discovery message.

It should be noted that the reference position may be acquired by each UE from the position management apparatus 500 as illustrated in Fig. 17, or, may be acquired from the base station eNB or from another UE via upper layer signaling/PD2DSCH/etc. Further, it may be assumed that each UE stores the reference position in advance.

Further, other than using the reference position as described above, or, in addition to using the reference position, a subset of the position may be included in the discovery message and the included result may be transmitted. The subset of the position means, for example, in the case where the position is represented by longitude and latitude, a series of numerical digits corresponding to the final numerical digits of each of the longitude value and the latitude value. It is assumed that a distance between UEs that perform D2D communications is equal to or less than a coverage. Therefore, it is assumed that the reception side UE stores the position (longitude and latitude) of the coverage (base station eNB). It is possible for the reception side UE to acquire a position (longitude and latitude) of the transmission side UE by receiving a series of numerical digits corresponding to the final numerical digits of each of the longitude value and the latitude value.

Further, other than using the reference position/subset as described above, or, in addition to using the reference position/subset, the position information may be included in the discovery message by increasing the discovery message size.

As a method for increasing the discovery message size, there is a method, for example, in which the transmission side UE transmits multiple discovery messages (each of which is of a standard size) in the same resource pool. In this case, each of the discovery messages includes an identifier used for linking the messages. For example, in the case where position information is transmitted by linking a message 1, a message 2, and a message 3 in this order, an identifier "1" is included in the message 1, an identifier "2" is included in the message 2, and an identifier "3" is included in the message 3.

The position information is divided and included in the multiple discovery messages. It is possible for the reception side UE to acquire divided information items from the multiple discovery messages, and to acquire the position information by linking the divided information items based on the identifiers.

Further, a new discovery message (extended discovery format) may be introduced in which the information amount is increased. As an example of the extended discovery format, there is a method in which a code rate is increased compared to the existing message, or a method in which a resource size per message is increased. Further, the number of PRBs per transmission may be increased, or the resource size may be increased by disabling the retransmission and using the retransmission resources. In the case where this kind of a new format is introduced, the reception side UE may identify the format by using blind detection, or, the resource pools may be divided for the existing messages and the new messages, and thus, the reception side UE may be able to distinguish between the existing message and the new message.

An embodiment according to the present invention can be applied regardless whether the UE is in coverage or not. Further, it is possible to perform high precision position/distance estimation.

### <Configuration example of position management apparatus 500>

Fig. 18 illustrates a functional structure diagram of a position management apparatus 500 that performs processes according to an embodiment. The position management apparatus 500 may be a server apparatus realized by a computer including a processor such as a CPU, or may be a dedicated apparatus (circuitry, etc.)

As illustrated in Fig. 18, the position management apparatus 500 includes a reference position providing unit 501 and a reference position storage unit 502. It should be noted that Fig. 18 illustrates only main function units in the position management apparatus 500. The position management apparatus 500 illustrated in Fig. 18 includes at least functions for performing all operations of the position management apparatus 500 described according to an embodiment. Further, a functional structure illustrated in Fig. 18 is merely an example. Functional classification and names of functional units may be anything as long as operations related to an embodiment can be performed.

The reference position providing unit 501 includes a function for providing the reference position to UEs as described in, for example, steps 301 and 302 in Fig. 17. In the reference position storage unit 502, the reference position is stored, which is provided to the UEs.

### <Configuration example of user apparatus UE>

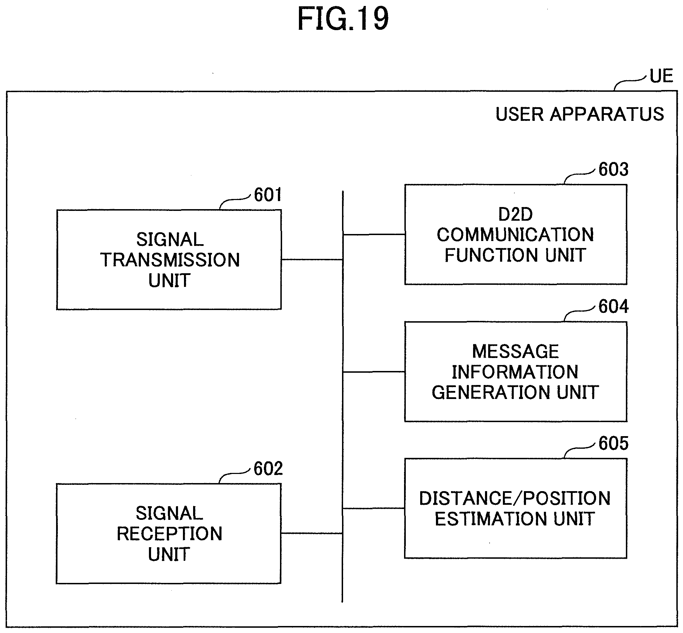

Fig. 19 illustrates a functional structure diagram of a user apparatus UE that performs processes according to an embodiment. It is assumed that the user apparatus UE has functions of a transmission side UE and a reception side UE according to an embodiment as described above. The user apparatus UE may have only a function of the transmission side UE or only a function of the reception side UE.

As illustrated in Fig. 19, the user apparatus UE includes a signal transmission unit 601, a signal reception unit 602, a D2D communication function unit 603, a message information generation unit 604, and a distance/position estimation unit 605. It should be noted that Fig. 19 illustrates only main function units in the user apparatus UE. The user apparatus UE illustrated in Fig. 19 includes at least functions for performing all operations of the user apparatus UE described according to an embodiment. Further, the user apparatus UE also includes at least functions (not shown in the figure) for operating according to LTE. Further, a functional structure illustrated in Fig. 19 is merely an example. Functional classification and names of functional units may be anything as long as operations related to an embodiment can be performed.

The signal transmission unit 601, the signal reception unit 602, and the D2D communication function unit 603 have basically similar functions as the signal transmission unit 101, the signal reception unit 102, and the D2D communication function unit 103, respectively, as described while making reference to Fig. 8. It should be noted that, according to an embodiment, the user apparatus UE has a function for acquiring a position. The function may be included in, for example, the D2D communication function unit 603.

The message information generation unit 604 includes a function for acquiring a reference position, including a difference between the position of the UE and the reference position in the discovery message, and transmitting the included result from the signal transmission unit 601 by using a method described according to an embodiment. Further, the message information generation unit 604 includes a function for including a subset of the position of the UE in the discovery message, and transmitting the included result from the signal transmission unit 601 by using a method described according to an embodiment. Further, the message information generation unit 604 includes a function for dividing the position information and transmitting the divided position information items by using multiple messages.

Further, the signal transmission unit 601 includes a function for transmitting the discovery message by using an extended discovery format. The distance/position estimation unit 605 includes a function for acquiring an original position from position information received as a reference position or a subset, and a function for acquiring original position information by linking position information items transmitted by using multiple messages. Further, it is possible for the distance/position estimation unit 605 to calculate a distance between UEs from position information of each UE.

### (Other examples)

As described above, embodiments have been described. It may be possible to combine the embodiments (as long as there is no contradiction). In other words, for example, it is possible to provide a UE that includes all functions of the UEs according to the first to the fourth embodiments.

Further, for example, a UE may transmit measurement result information of DM-RSs included in multiple D2D discovery messages to the base station eNB, and the base station eNB may estimate a position of the transmission source UE based on the transmitted information. Here, for example, it is assumed that positions of the transmission source UEs of the multiple D2D discovery messages have already been acquired by the base station eNB in advance.

Further, it may be assumed that positions of D2D-UEs, whose positions are known, and information items (identifiers or the like) of the D2D discovery messages transmitted by the D2D-UEs may be reported to a specific UE, and the specific UE may estimate its own position based on measurement results of DM-RSs included in the D2D discovery messages.

Further, according to an embodiment, a DM-RS included in a discovery message is used as a measurement target. It is not limited to a DM-RS. Another signal transmitted by a D2D-performing UE may be used.

Further, in order to reduce an interference level between UEs, measurement of a distance between UEs by using DM-RS may be limited to Type 2B discovery and Type 2A discovery for which scheduling from the eNB is available.

Further, regarding the discovery message used for measurement of a distance between UEs, a transmission power control that is different from that of the normal discovery message may be applied. For example, transmission power with the maximum transmission power of a UE, or fixed transmission power such as maximum transmission power as defined in the "discovery range" may be used. As described above, it is possible to remove uncertainty of distance estimation by using a fixed power and to improve SINR by using high power.

The position management apparatus according to an embodiment may include a CPU and a memory, may be realized by having a program executed by the CPU (processor), may be realized by hardware such as hardware circuitry or the like in which the logic described in an embodiment is included, or may be realized by a mixture of a program and hardware.

The user apparatus UE according to an embodiment may include a CPU and a memory, may be realized by having a program executed by the CPU, may be realized by hardware such as hardware circuitry or the like in which the logic described in an embodiment is included, or may be realized by a mixture of a program and hardware.

The base station eNB according to an embodiment may include a CPU and a memory, may be realized by having a program executed by the CPU (processor), may be realized by hardware such as hardware circuitry or the like in which the logic described in an embodiment is included, or may be realized by a mixture of a program and hardware.

As described above, embodiments have been described. The disclosed invention is not limited to these embodiments, and a person skilled in the art would understand various variations, modifications, replacements, or the like. Specific examples of numerical values have been used for encouraging understanding of the present invention. These numeric values are merely examples and, unless otherwise noted, any appropriate values may be used. In the above description, partitioning of items is not essential to the present invention. Matters described in more than two items may be combined if necessary. Matters described in one item may be applied to matters described in another item (as long as they do not conflict). In a functional block diagram, boundaries of functional units or processing units do not necessarily correspond to physical boundaries of parts. Operations of multiple functional units may be physically performed in a single part, or operations of a single functional unit may be physically performed by multiple parts. For the sake of description convenience, the base station eNB, the user apparatus UE, and the position management apparatus have been described by using functional block diagrams. These apparatuses may be implemented by hardware, by software, or by combination of both. The software which is executed by a processor included in the base station eNB according to an embodiment; the software which is executed by a processor included in the user apparatus UE according to an embodiment; and the software which is executed by a processor included in the position management apparatus according to an embodiment may be stored in a random access memory (RAM), a flash memory, a read-only memory (ROM), an EPROM, an EEPROM, a register, a hard disk drive (HDD), a removable disk, a CD-ROM, a database, a server, or any other appropriate recording medium.

The present invention is not limited to the above embodiments and various variations, modifications, alternatives, replacements, etc., may be included in the present invention without departing from the spirit of the invention.

The present application is based on and claims the benefit of priority of Japanese Priority Application No. 2014-213222 filed on October 17, 2014, the entire contents of which are hereby incorporated by reference.

### [DESCRIPTION OF THE REFERENCE NUMERALS]

- eNB: Base station
- UE: User apparatus
- 101: Signal transmission unit
- 102: Signal reception unit
- 103: D2D communication function unit
- 104: Transmission power acquisition control unit
- 105: Measurement unit
- 106: Distance estimation unit
- 201: Signal transmission unit
- 202: Signal reception unit
- 203: D2D communication function unit
- 204: Timing measurement unit
- 205: Timing report control unit
- 206: Distance estimation unit
- 300: Position management apparatus
- 301: Position related information acquisition unit
- 302: Position related information storage unit
- 303: Position related information providing unit
- 401: Signal transmission unit
- 402: Signal reception unit
- 403: D2D communication function unit
- 404: Position related information acquisition unit
- 405: Distance estimation unit
- 406: Position related information report unit
- 500: Position management apparatus
- 501: Reference position providing unit
- 502: Reference position storage unit
- 601: Signal transmission unit
- 602: Signal reception unit
- 603: D2D communication function unit
- 604: Message information generation unit
- 605: Distance/position estimation unit

## Claims

1. A user apparatus used in a mobile communication system in which D2D communications are supported, the user apparatus comprising:
an acquisition unit configured to acquire information of transmission power for transmitting a D2D signal at a transmission side user apparatus; and
a distance estimation unit configured to measure reception power of a reference signal multiplexed with the D2D signal received from the transmission side user apparatus, and to estimate a distance between the transmission side user apparatus and the user apparatus from the reception power and the transmission power.

2. The user apparatus according to claim 1, wherein the transmission power information is transmitted from a predetermined user apparatus by using a predetermined channel, or implicitly reported as information associated with a resource pool to which a transmission resource of the D2D signal received from the transmission side user apparatus belongs.

3. The user apparatus according to claim 1 or 2, wherein the reference signal includes information associated with the transmission side user apparatus, and the distance estimation unit identifies the reference signal transmitted from the transmission side user apparatus by using the information in the case where multiple reference signals are received via the same resource.

4. The user apparatus according to any one of claims 1 to 3, wherein the distance estimation unit calculates the reception power used for the distance estimation by measuring reception power of the D2D signal transmitted from the transmission side user apparatus and reception power of the D2D signal retransmitted one or more times from the transmission side user apparatus.

5. A user apparatus used as a first user apparatus in a mobile communication system in which D2D communications are performed between the first user apparatus and a second user apparatus, the user apparatus comprising:
a transmission unit configured to transmit a first D2D signal for requesting transmission of a second D2D signal;
a reception unit configured to receive the second D2D signal including reception timing information of the second user apparatus from the second user apparatus that has received the first D2D signal; and
a distance estimation unit configured to estimate a distance between the user apparatus and the second user apparatus by using the reception timing information included in the second D2D signal.

6. The user apparatus according to claim 5, wherein the transmission unit reports that the first D2D signal is a request requesting transmission of the second D2D signal based on information of a reference signal multiplexed with the first D2D signal.

7. The user apparatus according to claim 5 or 6, wherein identification information corresponding to the first D2D signal is included in the second D2D signal and the reception unit determines that the second D2D signal is a response to the request requested by the first D2D signal based on the identification information.

8. The user apparatus according to any one of claims 5 to 7, wherein a resource, which would be used as a retransmission resource of the first D2D signal in the case of retransmission of the first D2D signal, is used by the second user apparatus as a transmission resource of the second D2D signal.

9. A distance estimation method performed by a user apparatus used in a mobile communication system in which D2D communications are supported, the distance estimation method comprising:
acquiring information of transmission power for transmitting a D2D signal at a transmission side user apparatus; and
measuring reception power of a reference signal multiplexed with the D2D signal received from the transmission side user apparatus, and estimating a distance between the transmission side user apparatus and the user apparatus from the reception power and the transmission power.

10. A distance estimation method performed by a user apparatus used as a first user apparatus in a mobile communication system in which D2D communications are performed between the first user apparatus and a second user apparatus, the distance estimation method comprising:
transmitting a first D2D signal for requesting transmission of a second D2D signal;
receiving the second D2D signal including reception timing information of the second user apparatus from the second user apparatus that has received the first D2D signal; and
estimating a distance between the user apparatus and the second user apparatus by using the reception timing information included in the second D2D signal.
